# EUROPEAN PATENT APPLICATION

(11) **EP 1 607 880 A1**
(43) Date of publication of application: **21.12.2005**
(21) Application number: 03712843.6
(22) Date of filing: 24.03.2003
(51) Int. Cl.: G06F 15/177

(54) **DECENTRALIZED PROCESSING CONTROL DEVICE, DECENTRALIZED PROCESSING CONTROL METHOD, DECENTRALIZED PROCESSING CONTROL PROGRAM**

(71) Applicant: FUJITSU LIMITED, Kawasaki-shi, Kanagawa 211-8588 (JP)
(72) Inventor: ISHIHARA, Yasuhide, c/o Fujitsu Ltd, Kawasaki-shi, Kanagawa 211-8588 (JP); KAWARAI, Kenji, c/o Fujitsu Ltd., Kawasaki-shi, Kanagawa 211-8588 (JP)
(74) Representative: Sunderland, James Harry
(86) International application number: PCT/JP2003/003505
(87) International publication number: WO 2004/086246

(57) **Abstract**

When a distributed processing controller (110) receives a program (112d), which is a job from a terminal unit (110), a status-confirmation processor (113b) transmits a unit processing program (112a) and unit data (112b) to respective distributed processors A to C registered in a registration table (112c), to select a distributed processor suitable for requesting execution of the program (112d), based on the execution results sent back from the distributed processors A to C.

## Description

### TECHNICAL FIELD

The present invention relates to a distributed processing controller, a distributed processing control method, and a distributed processing control program, which selects any one of a plurality of distributed processors present on the Internet to request execution of a job.
More specifically, the invention relates to a distributed processing controller, a distributed processing control method, and a distributed processing control program, which selects a distributed processor suitable for requesting processing, when respective distributed processors are present and spanning over different organizations via the Internet, and requests execution of processing, thereby enabling efficient load balancing.

### BACKGROUND ART

Conventionally, distributed processing techniques that enable load balancing by using a plurality of distributed processors distributed on a network are known. For example, Patent document 1 (Japanese Patent Application Laid-open No. H7-182217) discloses a technique in which a database management system (DBMS) in a main database server checks the CPU use rate of two server machines and the cumulative state of processing request queues all the time, to select a server for executing the processing based on the data acquired by the checking, and outputs a processing request. Furthermore, Patent document 2 (Japanese Patent Application Laid-open No. H11-250020) discloses a technique in which a request distribution processor in a client device obtains load information of a plurality of servers from a server state controller, and when a processing request is output from the client device, a request relay unit outputs a server selection request, and the request distribution processor determines a server having less load based on the load information.

Thus, according to the conventional distributed processing techniques, distributed processing has been performed using a plurality of predetermined distributed processors and a controller that controls these distributed processors. Recently, however, a distributed processing technique referred to a so-called grid computing has become popular.

The grid computing stands for a computing base in which computers (distributed processors) in remote areas are connected via the Internet, to share computer resources such as processing power and data storage to perform processing, and various types of computers on the Internet can be regarded as the distributed processors to perform highly developed load balancing.

### Patent document 1

Japanese Patent Application Laid-open No. H7-182217

### Patent document 2

Japanese Patent Application Laid-open No. H11-250020

When such grid computing is adopted, however, since a dedicated distributed processors as in Patent Literature 1 and 2 is not used, there is a problem that a decision has to be made as to which distributed processor on the Internet is to be selected to request execution of processing.

Specifically, (1) since users do not know computers arranged in different distributed organizations, in many cases, they cannot actualize the computers as the distributed processors, and (2) the state of respective computers are always changing, and even if the information of these computers is centrally controlled, the centrally controlled information may not always be latest. Accordingly, it is difficult for the users to select the most appropriate computer (distributed processor) as a host.

Under such circumstances, when distributed processing such as grid computing is performed by many and unspecified computers as the distributed processors, it is an important issue as to how to select the appropriate computer to execute the processing.

The present invention has been achieved in order to solve the above problems. It is an object of the present invention to provide a distributed processing controller, a distributed processing control method, and a distributed processing control program, which selects a distributed processor suitable for requesting processing, when respective distributed processors are present and spanning over different organizations via the Internet, and requests execution of processing, thereby enabling efficient load balancing.

### DISCLOSURE OF INVENTION

According to the present invention, computers that can be the distributed processor are registered among the computers present on the Internet beforehand, and the unit processing is requested to the registered distributed processors. As a result, users can actualize a predetermined computer as the distributed processor, from various types of computers present in various locations on the Internet.

According to the present invention, the unit processing program that executes the processing of the predetermined processing unit and the unit data used when executing the unit processing program are stored, and the stored unit processing program and unit data are transmitted to the distributed processors. Accordingly, it is not necessary to install the unit processing program and the like in the respective distributed processors, and the appropriate distributed processor can be selected smoothly, without requiring preparation with respect to the distributed processors.

According to the present invention, the calculation amount required for the processing of the job, a unit processing program for performing processing respectively corresponding to a part of any one of the file input/output processing and the data transfer processing or both, and unit data used at the time of executing the unit processing program are stored, and a distributed processor, to which execution of the job is requested, is selected based on the unit processing time required for the processing of the unit processing program, the calculation amount, the input/output processing amount, and the data transfer amount of the unit processing program. As a result, a distributed processor suitable for any one of the calculation amount, the input/output amount, and the data transfer amount of the job can be selected.

According to the present invention, a value obtained by dividing the calculation amount of the job by the calculation amount of the unit processing program and multiplying the value by the unit processing time required for the processing of the unit processing program it designated as estimated computing time at the time of processing the job by the distributed processor, and a distributed processor, to which execution of the job is to be requested, is selected based on the estimated computing time. As a result, a distributed processor suitable for the calculation amount of the job can be efficiently selected with a simple operation.

According to the present invention, a value obtained by dividing the input/output processing amount of the job by the input/output processing amount of the unit processing program and multiplying the value by the unit processing time required for the processing of the unit processing program is designated as estimated input/output processing time at the time of processing the job by the distributed processor, and a distributed processor to which execution of the job is to be requested is selected based on the estimated input/output processing time. As a result, a distributed processor suitable for the input/output amount of the job can be efficiently selected with a simple operation.

According to the present invention, a value obtained by dividing the data transfer amount of the job by the data transfer amount of the unit processing program and multiplying the value by the unit processing time required for the processing of the unit processing program is designated as estimated data transfer time at the time of processing the job by the distributed processor, and a distributed processor to which execution of the job is to be requested is selected based on the estimated data transfer time. As a result, a distributed processor suitable for the data transfer amount of the job can be efficiently selected with a simple operation.

### BRIEF DESCRIPTION OF DRAWINGS

Fig. 1 is a system configuration diagram of a distributed processing system according to an embodiment;
Fig. 2 is a flowchart of a processing procedure of a terminal unit, a distributed processing controller, and distributed processors shown in Fig. 1;
Fig. 3 is a flowchart of an example of a unit processing program shown in Fig. 1;
Fig. 4 is an explanatory diagram of a case in which the unit processing program shown in Fig. 3 is used; and
Fig. 5 is an example of a registration table shown in Fig. 1.

### BEST MODE(S) FOR CARRYING OUT THE INVENTION

An exemplary embodiment of a distributed processing controller, a distributed processing control method, and a distributed processing control program according to the present invention will be explained in detail with reference to the accompanying drawings. The distributed processing system to be explained in the embodiment functions on the Internet.

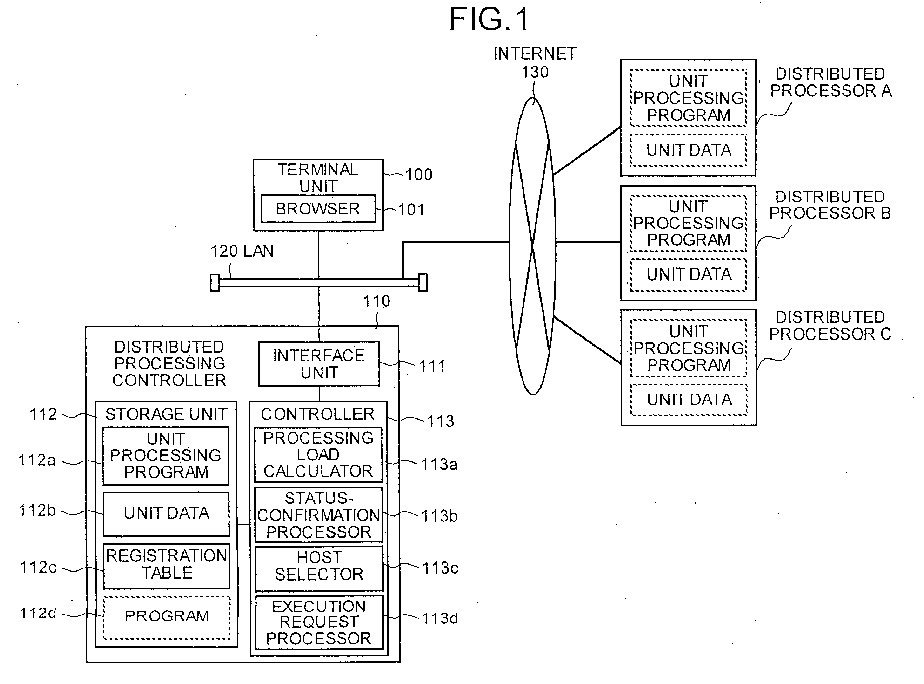

A system configuration of a distributed processing system according to the embodiment will be explained. Fig. 1 is a block diagram of the system configuration of the distributed processing system according to the embodiment. As shown in Fig. 1, in the distributed processing system, a terminal unit 100 and a distributed processing controller 110 are connected to a LAN 120, and also to respective distributed processors A to C on the Internet 130 via the LAN 120.

That is, the distributed processing system is one form of distributed processing referred to as the grid computing, which is a system in which respective computers connected to the Internet 130 are regarded as the distributed processors, so as to perform the distributed processing.

The terminal unit 100 has a browser 101, and requests execution of a job with respect to the distributed processing controller 110. The terminal unit 100 accesses a website provided by the distributed processing controller 110 using the browser 101 to perform predetermined input on the website, thereby requesting execution of a program 112d as the job. The browser 101 is an application that can browse the website on a World Wide Web (WWW) of the Internet.

The distributed processing controller 110 selects the most appropriate distributed processor from the distributed processors A to C, upon reception of the job execution request from the terminal unit 100, and issues a job execution request with respect to the selected distributed processor. The distributed processing controller 110 selects an appropriate device based on the status of the respective distributed processors A to C, at the time of selecting the distributed processor. This is because even in a distributed processor having high processing capability, the substantial processing capability can be decreased due to the presence of the job under execution.

Specifically, when selecting any one of the distributed processors A to C, the distributed processing controller 110 transmits a unit processing program 112a and unit data 112b to the respective distributed processors A to C, to select a distributed processor according to the current processing capability based on the returned processing result.

As shown in Fig. 1, the distributed processing controller 110 includes an interface unit 111, a storage unit 112, and a controller 113. The storage unit 112 stores the unit processing program 112a, the unit data 112b, a registration table 112c, and the program 112d as the job requested from the terminal unit 100. The controller 113 includes a processing load calculator 113a, a status-confirmation processor 113b, a host selector 113c, and an execution request processor 113d.

The interface unit 111 is for transferring data between the distributed processing controller 110 and the terminal unit 100 or the distributed processors A to C via the LAN 120 and the Internet 130, and a network card or the like corresponds thereto. The interface unit 111 performs data transfer processing according to the TCP/IP protocol.

The storage unit 112 is a storage device such as a hard disk or a RAM, and the data is read and written by the respective units in the controller 113. The unit processing program 112a stored in the storage unit 112 is for confirming the processing capability of the respective distributed processors A to C, and includes a program for CPU processing such as a floating-point operation or an integer operation, a program for disk I/O processing such as file input/output, or a program for data transfer such as network transfer.

The unit data 112b is used when executing the unit processing program 112a, and for example, becomes file data of a predetermined data amount (for example, 16 Megabytes) in the case of file input or output, or transfer data of a predetermined amount (for example, 16 Megabytes) in the case of data transfer.

The registration table 112c is a table in which a computer to be used as the distributed processor, of computers on the Internet 130 is registered, and holds IP addresses of the respective distributed processors A to C or the operating environment data. The reason why the registration table 112c is used is that since users can hardly know where the respective distributed processors are located, the distributed processors are actualized by adopting the registration system.

The program 112d is a job that is transmitted from the terminal unit 100. The reason for temporarily storing the program 112d is that it is not transmitted to the respective distributed processors A to C, but the status is confirmed using the unit processing program 112a as the preprocessing.

The controller 113 performs overall control of the distributed processing controller 110. The controller 113 includes a processing function as an HTTP server (not shown), and can browse websites by the browser 101 on the terminal unit 100, and receive an execution request of the job (program 112d) by a predetermined operation.

The processing load calculator 113a calculates the processing load of the job received from the terminal unit 100. Specifically, the processing load calculator 113a calculates the calculation amount, the file input/output amount, and the data transfer amount from the program 112d as the job. For example, the processing load calculator 113a automatically calculates the calculation amount, the file input/output amount, and the data transfer amount from the loop frequency of the program 112d, the count of file input/output command, the count of data transfer command, and the like. The reason why the calculation amount, the file input/output amount, and the data transfer amount are calculated is that the time required for the processing of the job (the program 112d) is estimated from the relation between the calculation amount of the unit processing program 112a and the time required for the processing of the distributed processors A to C, to determine which distributed processor is to be selected from the estimated value.

The status-confirmation processor 113b transmits the unit processing program 112a and the unit data 112b to the respective distributed processors A to C to request execution, and receives the execution results, to confirm the status of the respective distributed processors A to C through this processing.

The host selector 113c selects the distributed processor (host) that requests the execution of the program 112d as a job using the processing result received from the respective distributed processors A to C by the status-confirmation processor 113b. Specifically, calculation amount J1 of the job (program 112d) calculated by the processing load calculator 113a is divided by calculation amount I1 of the unit processing program 112a, and a value obtained by multiplying this value by computing time (TI1) of the unit processing program 112a is designated as estimated computing time TJ1 of the job (program 112d).
That is, TJ1=(J1/I1)×TI1.

Likewise, input/output data amount J2 of the job (program 112d) calculated by the processing load calculator 113a is divided by input/output data amount I2 of the unit processing program 112a, and a value obtained by multiplying this value by input/output time (TI2) of the unit processing program 112a is designated as estimated input/output time TJ2 of the job (program 112d). That is, TJ2=(J2/I2)×TI2.

Furthermore, transferred data amount J3 of the job (program 112d) calculated by the processing load calculator 113a is divided by transferred data amount I3 of the unit processing program 112a, and a value obtained by multiplying this value by data transfer time (TI3) of the unit processing program 112a is designated as estimated data transfer time TJ3 of the job (program 112d). That is, TJ3=(J3/I3)×TI3.

By performing this processing with respect to the respective distributed processors A to C, respectively, to calculate throughput time (=TJ1+TJ2+TJ3) for each of the respective distributed processors A to C, a distributed processor having the shortest throughput time is selected.

The execution request processor 113d requests the execution of the job (program 112d) with respect to the distributed processor selected by the host selector 113c. Specifically, the execution request processor 113d obtains the IP address of the distributed processor selected by referring to the registration table 112c and transmits the job (program 112d) to the distributed processor having the IP address to request the execution thereof.

The distributed processors A to C are computers present in various locations on the Internet 130, and registered in the registration table 112c in the distributed processing controller 110 to function as the distributed processor. Specifically, when the distributed processors A to C receive the program 112d as the job of the terminal unit 100 via the distributed processing controller 110, the distributed processors A to C execute the program 112d and transmit the execution result to the distributed processing controller 110.

The distributed processing controller 110 not only executes the program 112d, but also executes the unit processing program 112a and the unit data 112d received from the distributed processing controller 110 prior to the execution of the program 112d, and returns the unit processing program 112a and the unit data 112d to the distributed processing controller 110. This unit processing program 112a is executed, in order to check the processing capability including the dynamic status of the respective distributed processors A to C at the point in time on the distributed processing controller 110 side, and appropriately select the distributed processor that executes the program 112d as the job.

It is not necessary for the distributed processors A to C to install a program that functions as a mechanism for transferring data between these distributed processors and the distributed processing controller 110, or to store the data therein. That is, as seen from the respective distributed processors A to C, the configuration is not different from the conventional ones in which the program 112d as the job is received from the terminal unit 100, and hence, the configuration according to the present invention is installed only on the distributed processing controller 110 side.

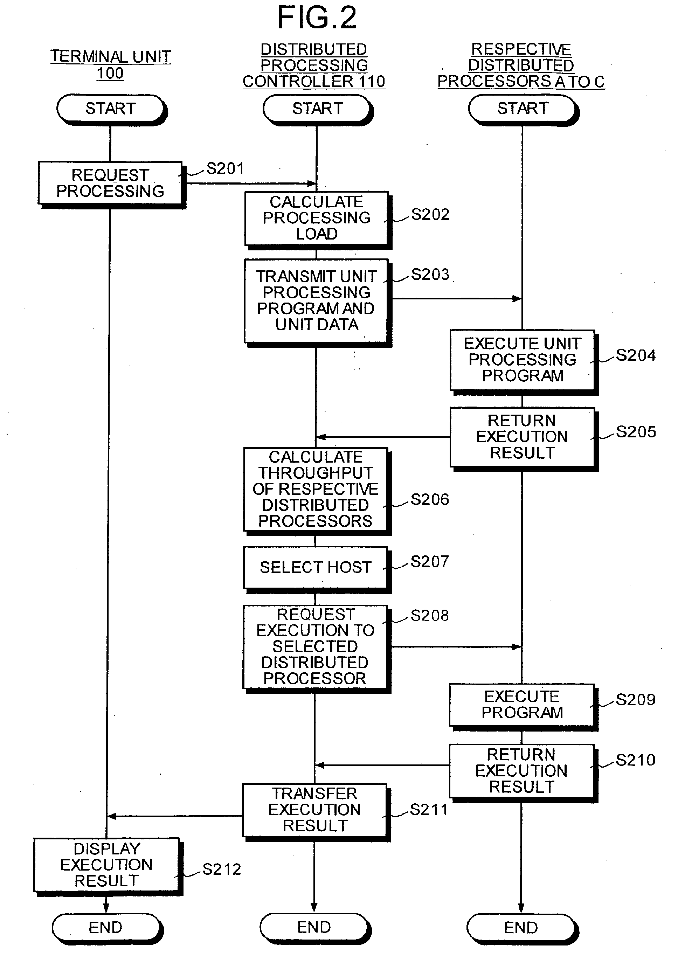

The processing procedure of the terminal unit 100, the distributed processing controller 110, and the respective distributed processors A to C shown in Fig. 1 will be explained below. Fig. 2 is a flowchart of the processing procedure of the terminal unit 100, the distributed processing controller 110, and the respective distributed processors A to C, shown in Fig. 1.

As shown in Fig. 2, when the terminal unit 100 transmits the program 112d as the job to the distributed processing controller 110 to request the processing (step S201), the distributed processing controller 110 temporarily stores the program 112d in the storage unit 112, and the processing load calculator 113a in the distributed processing controller 110 calculates the processing load required for the processing of the program 112d (step S202). Specifically, the calculation amount, the input/output data amount, and the data transfer amount required for the program 112d are estimated from the loop command of the program 112d, the input/output command and the data transfer command. Thereafter, the status-confirmation processor 113b transmits the unit processing program 112a and the unit data 112b to the respective distributed processors A to C.

The respective distributed processors A to C execute the received unit processing program 112a using the unit data 112b (step S203), and send back the execution result to the distributed processing controller 110 (step S204).

When having received the execution result from the respective distributed processors A to C, the distributed processing controller 110 calculates the throughput of the respective distributed processors A to C (step S206). Specifically, the calculation amount J1 of the program 112d is divided by the calculation amount I1 of the unit processing program 112a, and a value obtained by multiplying this value by the computing time (TI1) of the unit processing program 112a is designated as estimated computing time TJ1 of the job (program 112d). The input/output data amount J2 of the program 112d is divided by the input/output data amount I2 of the unit processing program 112a, and a value obtained by multiplying this value by the input/output time (TI2) of the unit processing program 112a is designated as estimated input/output time TJ2 of the job (program 112d). Furthermore, the transferred data amount J3 of the program 112d is divided by the transferred data amount 13 of the unit processing program 112a, and a value obtained by multiplying this value by the data transfer time (TI3) of the unit processing program 112a is designated as estimated data transfer time TJ3 of the job (program 112d), to calculate the throughput time (=TJ1+TJ2+TJ3).

Thereafter, the host selector 113c selects the distributed processor having the smallest throughput, of the throughput of the respective distributed processors A to C, as an execution request destination of the program 112d (step S207). The execution request processor 113d transmits the program 112d to the distributed processor selected by the host selector 113c.

Upon reception of the program 112d, the distributed processor executes the program 112d (step S209), and sends back the execution result to the distributed processing controller 110 (Step S210). The distributed processing controller 110 further transfers the execution result to the terminal unit 100 (step S211), and the execution result is finally displayed on a display screen of the terminal unit 100 (step S212).

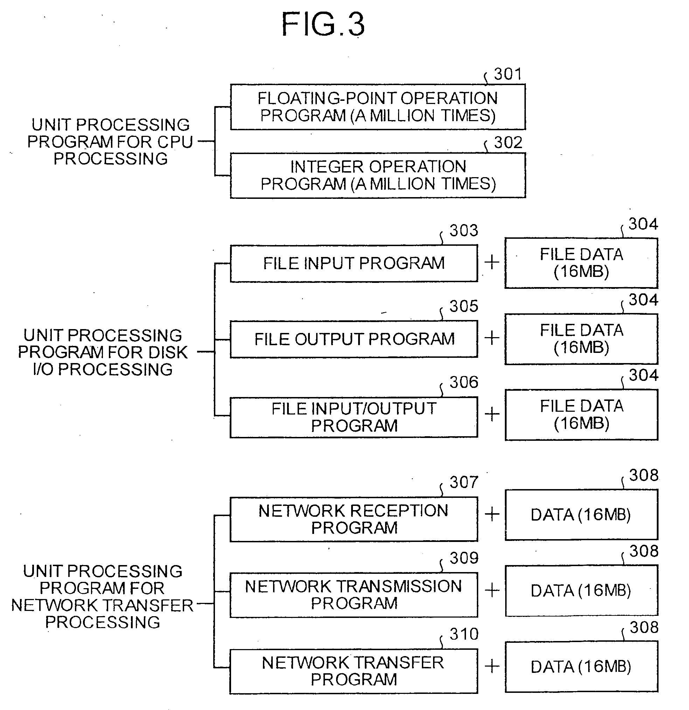

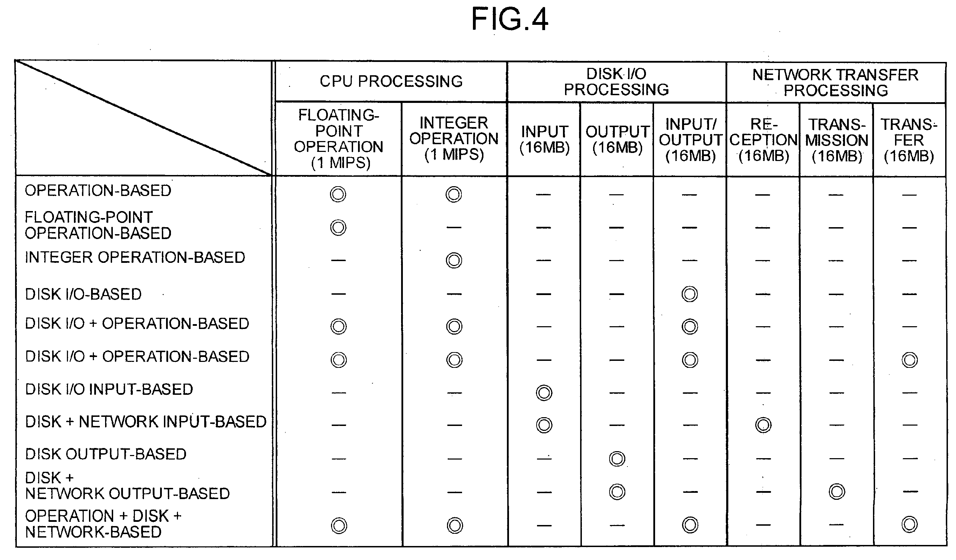

One example of the unit processing program 112a and the unit data 112b shown in Fig. 1 will be explained. Fig. 3 is an example of the unit processing program 112a and the unit data 112b shown in Fig. 1, and Fig. 4 is an explanatory diagram of a case that the unit processing program 112a shown in Fig. 3 is used.

As shown in Fig. 3, the unit processing program 112a includes a unit processing program for CPU processing for checking the processing time of the CPU, a unit processing program for disk I/O processing for checking the processing time of disk I/O, and a unit processing program for network transfer processing for checking the processing time of data transfer on the network.

A floating point operation program 301 of 1 MIPS or an integer operation program 302 of 1 MIPS can be used as the unit processing program for CPU processing.

A file input program 303, a file output program 305, and a file input/output program 306 can be used as the unit processing program for disk I/O processing. File data (for example, 16 Megabytes) 304 used at the time of executing these programs is provided as the unit data 112b from the distributed processing controller 110 side to the respective distributed processors A to C.

A network reception program 307, a network transmission program 309, and a network transfer program 310 can be used as the unit processing program for network transfer processing. Data (for example, 16 Megabytes) 308 used at the time of executing these programs is provided as the unit data 112b from the distributed processing controller 110 side to the respective distributed processors A to C. The data transfer destination on the network can be optionally set, but the distributed processing controller 110 can be set as the data transfer destination.

How to use the unit processing program 112a corresponding to respective statuses will be explained. As shown in Fig. 4, when the program 112d as the job is operation-based, it is desired to use the floating point operation program (1 MIPS: million instructions per second) 301 and the integer operation program (1 MIPS) 302.

When the program 112d as the job is floating point operation-based, it is desired to use the floating-point operation program (1 MIPS) 301, and when the program 112d is integer operation-based, it is desired to use the integer operation program (1 MIPS) 302.

When the program 112d as the job is disk I/O-based, it is desired to use the file input/output program 306, and when the program 112d is disk I/O and operation-based, it is desired to use the floating point operation program (1 MIPS) 301, the integer operation program (1 MIPS) 302, and the file input/output program 306. When the network transfer is taken into consideration, it is desired to use the network transfer program 310.

When the program 112d as the job is disk I/O input-based, it is desired to use the file input program 303, and when the program 112d is disk input and network input-based, it is desired to use the file input program 303 and the network reception program 307.

When the program 112d as the job is disk I/O output-based, it is desired to use the file output program 305, and when the program 112d is disk I/O output and network output-based, it is desired to use the file output program 305 and the network transfer program 309.

When the program 112d as the job is all of operation, disk I/O, and network transfer-based, it is desired to use the floating point operation program (1 MIPS) 301, the integer operation program (1 MIPS) 302, the file input/output program 306, and the network transfer program 310.

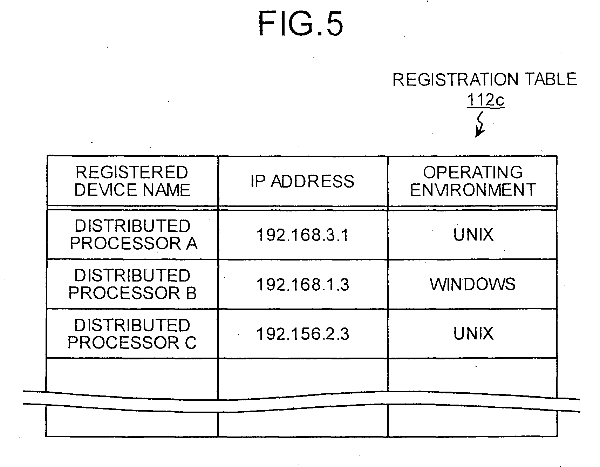

An example of the registration table 112c shown in Fig. 1 will be explained. Fig. 5 is an example of the registration table 112c shown in Fig. 1. As shown in Fig. 5, only computers that function as the distributed processor, of the various kinds of computers on the Internet, are registered in the registration table 112c. The reason why such registration is performed is that in the grid computing system, it is not actualized for the users who use the terminal units 100 as to which computer can be used as the distributed processor, and a lot of time is required for selection of the distributed processor.

As shown in Fig. 5, the registered device name indicating the computer name, the IP address of the computer, and the operating environment of the computer are stored in association with each other in the registration table 112c. For example, for the distributed processor A, the IP address 192.168.3.1 and UNIX as the operating system thereof are stored in association with each other.

For the distributed processor B, the IP address 192.168.1.3 and WINDOWS as operating system thereof are stored, and for the distributed processor C, the IP address 192.156.2.3 and UNIX as the operating system thereof are stored, in association with each other.

When the operating environment of the distributed processors A to C is different, it is necessary to prepare the unit processing program 112a for each operating environment and hold it in the distributed processing controller 110, and transmit the unit processing program 112a suitable for the operating environment to the distributed processors A to C.

As explained above, in the embodiment, when the distributed processing controller 110 receives the program 112d, which is the job from the terminal unit 110, the status-confirmation processor 113b transmits the unit processing program 112a and the unit data 112b to the respective distributed processors A to C registered in the registration table 112c, to select a distributed processor suitable for requesting execution of the program 112d, based on the execution results returned from the distributed processors A to C. Accordingly, the distributed processor suitable for requesting the processing is selected to request the execution of processing, thereby enabling efficient load balancing.

While a case that the present invention is applied to a client-server system has been explained here, the invention is also applicable to a case where an autonomous agent such as a telescript is used. Specifically, the distributed processing controller 110 prepares an autonomous agent having the unit processing program 112a, the unit data 112b, and the registration table 112c therein, and sends out the autonomous agent, upon reception of the program 112d as the job from the terminal unit 100. The autonomous agent accesses computers that function as distributed processors by themselves, to obtain the execution result of the unit processing program 112a, and after having obtained all execution results, returns to the distributed processing controller 110. Accordingly, a distributed processor suitable for requesting the execution of the program 112d as the job can be efficiently selected, by the execution results obtained by the autonomous agent.

While an example of the unit processing program 112a has been explained with reference to Figs. 3 and 4, the invention is not limited thereto and also applicable to a case that other unit processing programs are used.

According to the present invention, unit processing is requested with respect to the distributed processors, the processing result sent back from the respective distributed processors in response to the request of unit processing is received, to select a distributed processor suitable for requesting the execution of the job, based on the processing result of the respective received processors. Accordingly, efficient load balancing can be performed by selecting an appropriate distributed processor for requesting the processing, to request the execution of.the processing.

According to the present invention, computers that can be the distributed processor are registered among the computers present on the Internet beforehand, and the unit processing is requested to the registered distributed processors. As a result, users can actualize a predetermined computer as the distributed processor, from various types of computers present in various locations on the Internet.

According to the present invention, the unit processing program that executes the processing of the predetermined processing unit and the unit data used when executing the unit processing program are stored, and the stored unit processing program and unit data are transmitted to the distributed processors. Accordingly, it is not necessary to install the unit processing program and the like in the respective distributed processors, and the appropriate distributed processor can be selected smoothly, without requiring preparation with respect to the distributed processors.

According to the present invention, the calculation amount required for the processing of the job, a unit processing program for performing processing respectively corresponding to a part of any one of the file input/output processing and the data transfer processing or both, and unit data used at the time of executing the unit processing program are stored, and a distributed processor, to which execution of the job is requested, is selected based on the unit processing time required for the processing of the unit processing program, the calculation amount, the input/output processing amount, and the data transfer amount of the unit processing program. As a result, a distributed processor suitable for any one of the calculation amount, the input/output amount, and the data transfer amount of the job can be selected.

According to the present invention, a value obtained by dividing the calculation amount of the job by the calculation amount of the unit processing program and multiplying the value by the unit processing time required for the processing of the unit processing program it designated as estimated computing time at the time of processing the job by the distributed processor, and a distributed processor, to which execution of the job is to be requested, is selected based on the estimated computing time. As a result, a distributed processor suitable for the calculation amount of the job can be efficiently selected with a simple operation.

According to the present invention, a value obtained by dividing the input/output processing amount of the job by the input/output processing amount of the unit processing program and multiplying the value by the unit processing time required for the processing of the unit processing program is designated as estimated input/output processing time at the time of processing the job by the distributed processor, and a distributed processor to which execution of the job is to be requested is selected based on the estimated input/output processing time. As a result, a distributed processor suitable for the input/output amount of the job can be efficiently selected with a simple operation.

According to the present invention, a value obtained by dividing the data transfer amount of the job by the data transfer amount of the unit processing program and multiplying the value by the unit processing time required for the processing of the unit processing program is designated as estimated data transfer time at the time of processing the job by the distributed processor, and a distributed processor to which execution of the job is to be requested is selected based on the estimated data transfer time. As a result, a distributed processor suitable for the data transfer amount of the job can be efficiently selected with a simple operation.

### INDUSTRIAL APPLICABILITY

When the respective distributed processors are present in various locations and spanning over different organizations via the Internet, the distributed processing controller, the distributed processing control method, and the distributed processing control program according to the present invention are suitable for performing efficient load balancing, by selecting a distributed processor suitable for requesting the processing and requesting the execution of the processing thereto.

## Claims

1. A distributed processing controller that selects any one of a plurality of distributed processors present on the Internet and requesting execution of a job, comprising:
a status-confirming unit that requests unit processing with respect to the distributed processors, and receives the processing results sent back from the respective distributed processors in response to the unit processing request, to confirm the status of the distributed processors; and
a selector that selects a distributed processor, to which execution of the job is requested based on the processing results of the distributed processors received by the status-confirming unit.

2. The distributed processing controller according to claim 1, wherein the status-confirming unit registers computers that can be the distributed processor among the computers present on the Internet beforehand, and requests the unit processing to the registered distributed processors.

3. The distributed processing controller according to claim 1, further comprising a storage unit that stores a unit processing program for executing processing in a predetermined processing unit, and unit data used at the time of executing the unit processing program, and the status-confirming unit transmits the unit processing program and the unit data stored in the storage unit to the distributed processors.

4. The distributed processing controller according to claim 3, wherein the storage unit stores the calculation amount required for the processing of the job, a computer code for performing processing respectively corresponding to a part of any one of the file input/output processing and the data transfer processing or both, and unit data used at the time of executing the computer code, and the selecting unit selects a distributed processor, to which execution of the job is requested, based the unit processing time required for the processing of the computer code, the calculation amount, the input/output processing amount, and the data transfer amount of the computer code, and the calculation amount, the input/output processing amount, and the data transfer amount of the job, sent back from the respective distributed processors.

5. The distributed processing controller according to claim 4, wherein the selector designates a value obtained by dividing the calculation amount of the job by the calculation amount of the unit processing program and multiplying the value by the unit processing time required for the processing of the unit processing program as estimated computing time at the time of processing the job by the distributed processor, and selects a distributed processor, to which execution of the job is to be requested based on the estimated computing time.

6. The distributed processing controller according to claim 4, wherein the selector designates a value obtained by dividing the input/output processing amount of the job by the input/output processing amount of the unit processing program and multiplying the value by the unit processing time required for the processing of the unit processing program as estimated input/output processing time at the time of processing the job by the distributed processor, and selects a distributed processor to which execution of the job is to be requested based on the estimated input/output processing time.

7. The distributed processing controller according to claim 4, wherein the selector designates a value obtained by dividing the data transfer amount of the job by the data transfer amount of the unit processing program and multiplying the value by the unit processing time required for the processing of the unit processing program as estimated data transfer time at the time of processing the job by the distributed processor, and selects a distributed processor to which execution of the job is to be requested based on the estimated data transfer time.

8. A method of controlling distributed processing of selecting any one of a plurality of distributed processors present on the Internet and requesting execution of a job, comprising:
a status-confirming step of requesting unit processing with respect to the distributed processors, and receiving the processing results sent back from the respective distributed processors in response to the unit processing request, to confirm the status of the distributed processors; and
a selecting step of selecting a distributed processor, to which execution of the job is requested based on the processing results of the distributed processors received at the status-confirming step.

9. The method of controlling distributed processing according to claim 8, wherein the status-confirming step includes registering computers that can be the distributed processor among the computers present on the Internet beforehand, and requesting the unit processing to the registered distributed processors.

10. The method of controlling distributed processing according to claim 8, further comprising storing a unit processing program for executing processing in a predetermined processing unit in a storing unit, and unit data used at the time of executing the unit processing program, and the status-confirming step includes transmitting the unit processing program and the unit data stored in the storage unit to the distributed processors.

11. The method of controlling distributed processing according to claim 10, wherein the storage unit stores the calculation amount required for the processing of the job, a computer code for performing processing respectively corresponding to a part of any one of the file input/output processing and the data transfer processing or both, and unit data used at the time of executing the computer code, and the selecting step includes selecting a distributed processor, to which execution of the job is requested, based the unit processing time required for the processing of the computer code, the calculation amount, the input/output processing amount, and the data transfer amount of the computer code, and the calculation amount, the input/output processing amount, and the data transfer amount of the job, sent back from the respective distributed processors.

12. The method of controlling distributed processing according to claim 11, wherein the selecting includes designating a value obtained by dividing the calculation amount of the job by the calculation amount of the unit processing program and multiplying the value by the unit processing time required for the processing of the unit processing program as estimated computing time at the time of processing the job by the distributed processor, and selecting a distributed processor, to which execution of the job is to be requested based on the estimated computing time.

13. The method of controlling distributed processing according to claim 11, wherein the selecting includes designating a value obtained by dividing the input/output processing amount of the job by the input/output processing amount of the unit processing program and multiplying the value by the unit processing time required for the processing of the unit processing program as estimated input/output processing time at the time of processing the job by the distributed processor, and selecting a distributed processor to which execution of the job is to be requested based on the estimated input/output processing time.

14. The method of controlling distributed processing according to claim 11, wherein the selecting includes designating a value obtained by dividing the data transfer amount of the job by the data transfer amount of the unit processing program and multiplying the value by the unit processing time required for the processing of the unit processing program as estimated data transfer time at the time of processing the job by the distributed processor, and selecting a distributed processor to which execution of the job is to be requested based on the estimated data transfer time.

15. A computer program for controlling distributed processing of selecting any one of a plurality of distributed processors present on the Internet and requesting execution of a job, the computer program causing a computer to execute:
a status-confirming step of requesting unit processing with respect to the distributed processors, and receiving the processing results sent back from the respective distributed processors in response to the unit processing request, to confirm the status of the distributed processors; and
a selecting step of selecting a distributed processor, to which execution of the job is requested based on the processing results of the distributed processors received at the status-confirming step.

16. The computer program according to claim 15, wherein the status-confirming step includes registering computers that can be the distributed processor among the computers present on the Internet beforehand, and requesting the unit processing to the registered distributed processors.

17. The computer program according to claim 15, wherein the computer program further causes the computer to store a unit processing program for executing processing in a predetermined processing unit, and unit data used at the time of executing the unit processing program, and the status-confirming step includes transmitting the unit processing program and stored unit data to the distributed processors.

18. The computer program according to claim 17, wherein the storing includes storing the calculation amount required for the processing of the job, a computer code for performing processing respectively corresponding to a part of any one of the file input/output processing and the data transfer processing or both, and unit data used at the time of executing the computer code, and the selecting step includes selecting a distributed processor, to which execution of the job is requested, based the unit processing time required for the processing of the computer code, the calculation amount, the input/output processing amount, and the data transfer amount of the computer code, and the calculation amount, the input/output processing amount, and the data transfer amount of the job, sent back from the respective distributed processors.

19. The computer program according to claim 18, wherein the selecting includes designating a value obtained by dividing the calculation amount of the job by the calculation amount of the unit processing program and multiplying the value by the unit processing time required for the processing of the unit processing program as estimated computing time at the time of processing the job by the distributed processor, and selecting a distributed processor, to which execution of the job is to be requested based on the estimated computing time.

20. The computer program according to claim 18, wherein the selecting includes designating a value obtained by dividing the input/output processing amount of the job by the input/output processing amount of the unit processing program and multiplying the value by the unit processing time required for the processing of the unit processing program as estimated input/output processing time at the time of processing the job by the distributed processor, and selecting a distributed processor to which execution of the job is to be requested based on the estimated input/output processing time.

21. The computer program according to claim 18, wherein the selecting includes designating a value obtained by dividing the data transfer amount of the job by the data transfer amount of the unit processing program and multiplying the value by the unit processing time required for the processing of the unit processing program as estimated data transfer time at the time of processing the job by the distributed processor, and selecting a distributed processor to which execution of the job is to be requested based on the estimated data transfer time.
